Europäisches Patentamt

European Patent Office

Office européen des brevets

(11) Publication number: **0 263 183 B1**

# EUROPEAN PATENT SPECIFICATION

(45) Date of publication of patent specification: **12.01.94**  (51) Int. Cl.5: **B01D 53/34**

(21) Application number: **87901679.8**

(22) Date of filing: **13.03.87**

(86) International application number:
**PCT/JP87/00157**

(87) International publication number:
**WO 87/05531 (24.09.87 87/21)**

(54) NH3-Injection controller.

(30) Priority: **14.03.86 JP 55003/86**

(43) Date of publication of application:
**13.04.88 Bulletin 88/15**

(45) Publication of the grant of the patent:
**12.01.94 Bulletin 94/02**

(84) Designated Contracting States:
**AT DE FR GB IT NL SE**

(56) References cited:
**JP-A-53 132 466**
**JP-A-60 202 716**

**No relevant documents have been disclosed.**

(73) Proprietor: **MITSUBISHI JUKOGYO KABUSHIKI KAISHA**
**5-1, Marunouchi 2-chome**
**Chiyoda-ku**
**Tokyo 100(JP)**

(72) Inventor: **SAGARA, Kazuo Mitsubishi Jukogyo**
**Kabushiki Kaisa**
**5-1, Marunouchi 2-chome**
**Chiyoda-ku**
**Tokyo 100(JP)**
Inventor: **NAGAI, Tomoyuki**
**Mitsubishi Jukogyo Kabushiki Kaisha**
**5-1, Marunouchi 2-chome Chiyoda-ku**
**Tokyo(JP)**
Inventor: **ARAKI, Soichi N.S.& E.W. Mitsubishi**
**J.K.K.**
**1-1, Akunoura-machi**
**Nagasaki-shi**
**Nagasaki Pref. 850(JP)**
Inventor: **DEMOTO, Masanori N.S.& E.W. Mitsubishi J.K.K.**
**1-1, Akunoura-machi**
**Nagasaki-shi**
**Nagasaki Pref. 850(JP)**

Rank Xerox (UK) Business Services
(3.10/3.9/3.3.3)

(74) Representative: **Dr. Fuchs, Dr. Luderschmidt**
**Dr. Mehler, Dipl.-Ing Weiss Patentanwälte**
**Postfach 46 60**
**Abraham-Lincoln-Strasse 7**
**D-65036 Wiesbaden (DE)**

## Description

## TECHNICAL FIELD

The present invention relates to an NH₃ injection controller which controls a quantity of NH₃ injected into a denitrating apparatus for exhaust gas containing NOₓ.

## BACKGROUND ART

An environmental standard value of nitrogen oxide (hereinafter referred to as "NOx") is determined in the country.

In order to satisfy the standard value, a prime mover for use in a boiler is generally forced so that a maximum value of NOx exhausted upon a maximum load satisfies the regulation value.

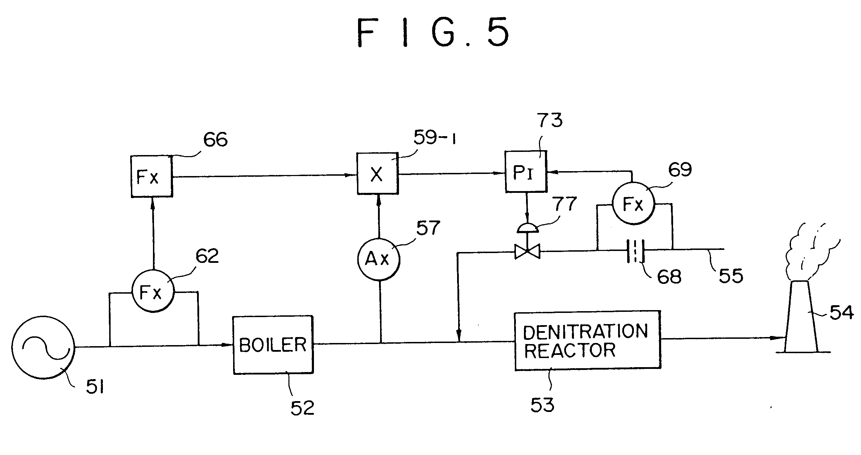

Fig. 5 shows a system diagram of a denitrating apparatus into which a prior art NH₃ injection controller is incorporated. Reference numeral 51 in Fig. 5 denotes a forced draft fan which is coupled with a boiler 52. The boiler 52 is coupled with a denitration reactor 53, which is further coupled with a chimney 54. An NH₃ intake pipe 55 is coupled with an inlet of the reactor 53.

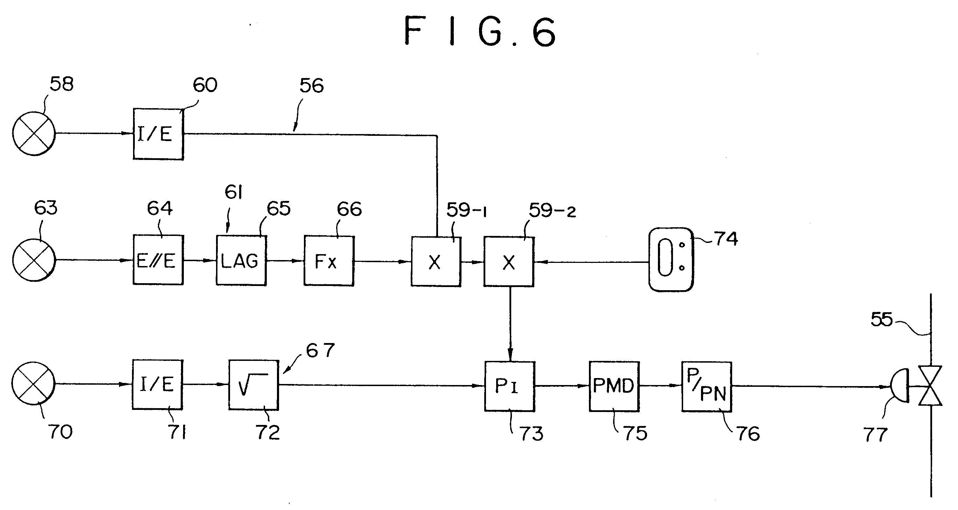

On the other hand, the NH₃ injection controller comprises a measuring system 56 for measuring a concentration of NOx at the inlet of the reactor 53 as shown in Figs. 5 and 6. The measuring system 56 comprises an analyzer 57 which measures the NOx concentration at the inlet of the reactor 53, an oscillator 58 connected to the analyzer 57 and a current-to-voltage converter 60 which converts a signal of the oscillator 58 to supply the converted signal to a first multiplier 59-1.

In the figures, reference numeral 61 denotes a measuring system of combustion air or fuel consumption. The measuring system 61 comprises a flow meter 62 which measures a flow between the draft fan 51 and the boiler 52, an oscillator 63 connected to the flow meter 62 and a function generator 66 connected to the oscillator 63 through an isolated voltage converter 64 and a primary delay element 65. A signal of the function generator 66 is supplied to the first multiplier 59-1.

In the figures, reference numeral 67 denotes a system for measuring a flow of NH₃. The measuring system 67 comprises a flow meter 69 which measures a flow of NH₃ before and behind an orifice 68 provided on the way of the intake pipe 55, an oscillator 70 connected to the flow meter 69, and a function operation unit 72 connected through a current-to-voltage converter 71 to the oscillator 70.

The first multiplier 59-1 is connected through a second multiplier 59-2 to a proportional-plus-integral adjuster 73, and the multiplier 59-2 supplies an NOx conditional set value to the adjuster 73. The second multiplier 59-2 is generally connected to a molar ratio setting device 74 and the ratio of the set value from the first multiplier 59-1 can be changed by the second multiplier 59-2 and the molar ratio setting device 74.

Further, the proportional-plus-integral adjuster 73 is supplied with a signal of the operation unit 72. The adjuster 73 is connected through a pulse motor driver 75 and a pulse-to-air converter 76 to an NH₃ gas flow control valve 77 provided on the way of the NH₃ intake pipe 55. An NOx and NH₃ analyzer for watching which has no relation to control of NH₃ is provided at the inlet of the chimney 54.

Operation of the above NH₃ injection controller is now described. First of all, the function generator 66 calculates a corresponding gas quantity on the basis of the air flow or the fuel consumption. In this connection, direct measurement of the gas quantity is impossible accurately and difficult technically and economically. The first multiplier 59-1 multiplies the value calculated by the function generator 66 with the NOx concentration value at the inlet of the denitration reactor 53 detected by the analyzer 57 to calculate the total NOx value, which is a set value (target value) for control. However, the set value can be multiplied with a coefficient from the molar ratio setting device 74 in the second multiplier 59-2 to be able to modify the set value. On the other hand, the flow of the NH₃ gas intake pipe 55 is measured by the flow meter 69. Then, a difference between the set value of the second multiplier 59-2 and the measured value from the flow meter 69 is calculated in the proportional-plus-integral adjuster 73. The difference is converted to a signal through the pulse motor driver 75 and the pulse-to-air converter 76 and the converted signal operates the NH₃ flow control value 77 provided in the NH₃ gas intake pipe 55 to control a supply quantity of NH₃.

The foregoing analog control is disadvantageous as follows. The value of NOx exhausted from the chimney can satisfy the standard value in the load limiter operation when the load is settled. However, in the operation state in which the load is always varied repeatedly and the NOx value at the inlet of the denitration reactor is suddenly changed (Daily Start & Stop (DSS) operation, Automatic Frequency Control (AFC) operation, etc.), it is impossible to effect the proper NH₃ injection control which can follow the load variation (rapid change of NOx value at the inlet of the reactor) due to a delay of the detection response time of the NOx analyzer provided in the inlet of the reactor. Accordingly, it is necessary to always inject excess ammonia to cause the NOx exhausted from the chimney to satisfy the NOx standard value. While it is considered that the molar ratio can be frequently varied by the manual operation to follow the load variation, the operation is complicated. Such excess injection of $NH_3$ increases the $NH_3$ concentration in the exhausted gas. Consequently, unreacted $NH_3$ is exhausted and facilities disposed in the succeeding stages are influenced adversely.

It is an object of the present invention to solve the drawbacks in the prior art $NH_3$ injection controller of the denitrating apparatus as described above by providing an $NH_3$ injection controller of a denitrating apparatus which can estimate the concentration of $NH_3$ remaining at the outlet of the denitrating apparatus to correct the injection quantity of $NH_3$ and can cope with rapid increase of the flow of gas and the concentration of NOx at the inlet of the denitrating apparatus and a difference of the concentration of NOx and $NH_3$ at the outlet of the denitrating apparatus with respect to set values thereof as pulse signals to control the injection quantity of $NH_3$ in the pulse manner so as to be able to follow the frequent variation of a load completely and eliminate the excess consumption of $NH_3$.

The prior art according to JP-A-53 132 466 shows an $NH_3$ injection controller which controls a quantity of $NH_3$ injected into a denitrating apparatus for exhaust gas containing NOx, provided with

- metering means for measuring NOx concentration at the inlet of the denitrating apparatus with a concentration detector (analyzer) followed by signal stages,
- metering means for measuring NOx concentration at the outlet of the denitrating apparatus, with a concentration detector, followed by signal stages,
- metering means for measuring $NH_3$ concentration at the outlet of the denitrating apparatus, with a concentration detector (analyzer) followed by signal stages,
- metering means for measuring the flow-rate of $NH_3$ injected, with a flow-meter followed by signal stages,
- metering means including a detector and signal stages for measuring the flow-rate of exhaust gas introduced into the denitrating apparatus, and
- control means for combining the output signals of these signal stages to determine the pour-in amount of $NH_3$ and to produce corresponding output signals to the $NH_3$ injector.

The control means (computer stage) therefore serves as the controller in automatic control loop for denitration of the nitrogen oxides in the off-gas. The computer stage calculates the most appropriate ammonia injection amount and generates a corresponding output signal depending on the following conditions:

- Increase the ammonia injection amount when the flow and NOx concentration of the off-gas and the NOx concentration of the treated gas at the outlet of the reactor or their difference becomes large; and
- Decrease the ammonia injection amount when the ammonia concentration in the treated gas at the outlet of the reactor becomes large.

The temperature of the gas to be treated is also taken into account for said output.

The principle of this prior art $NH_3$-injection controller is to judge all the elements of the flow and NOx concentration of the gas to be treated and the ammonia and NOx concentrations in the treated gas; that is, the judgment is based on the NOx concentration differences between the upstream and downstream of the reactor (in contrast with those merely placing an NOx concentration meter in the upstream or downstream of the reactor). Especially, by placing the ammonia meter in the downstream of the reactor, ammonia can he injected in a better amount than in the prior art before (Fig. 5), to avoid secondary pollution caused by blending ammonia with the treated gas.

DISCLOSURE OF INVENTION

The $NH_3$ injection controller of the invention is distinguished from the known $NH_3$ injection controller according to JP-A-53 132 466 in that

- said control means consist of a single computer stage, on whose inlet the output signal of the metering means for measuring the flow-rate of injected $NH_3$ is also imposed,
- the detector of said metering means for measuring the flow-rate of exhaust gas is coupled with the load-controller of the exhaust gas generator, in connection with load variation detector means with a detector and signal stages for detecting rapid variation in the setting of said load-controller.

Said control means consist of a single computer stage, on whose inlet the output signal of the metering means for measuring the flow-rate of injected $NH_3$ is also imposed, the detector of said metering means for measuring the flow-rate of exhaust gas is coupled with the load-controller of the exhaust gas generator, in connection with load variation detector means with a detector and signal stages for detecting rapid variation in the setting of said load-controller.

Said control means are provided with

- means for determining a base quantity of $NH_3$ injected on the basis of a signal from said metering means for measuring the flow-rate of exhaust gas, producing an output signal corresponding to the base quantity,

- means for determining pulsed amount of $NH_3$ injected on the basis of a signal from the load variation detector means, producing a pulsed signal varying in amplitude and width of the pulses corresponding to a rapid increase of the load and therefore of the flow of exhaust gas and/or NOx concentration,
- means for determining pulsed amounts of $NH_3$ injected on the basis of a pulse signal varying in amplitude and width of the pulses corresponding to a difference between the measured value of NOx at the outlet of the denitrating apparatus and a set value of NOx, whereby the set value is an estimated value of NOx concentration at the outlet of the denitrating apparatus on the basis of the measured NOx concentration at the inlet of the denitrating apparatus and the denitration ratio,
- means for determining pulsed amounts of $NH_3$ injected on the basis of a correcting pulse signal varying in amplitude and width of the pulses corresponding to a difference between the measured value of $NH_3$ at the outlet of the denitrating apparatus and a set value of $NH_3$, whereby the set value is an estimated value of $NH_3$ concentration at the outlet of the denitrating apparatus on the basis of the flow-rate of the exhaust gas, the NOx concentration in the exhaust gas, the denitration rate in the denitration reaction and the base quantity of the injected $NH_3$,
- there are means for controlling a quantity of $NH_3$ injected into the denitrating apparatus in accordance with the base quantity signal of the injected $NH_3$ and the pulse signals of $NH_3$.

BRIEF DESCRIPTION OF DRAWINGS

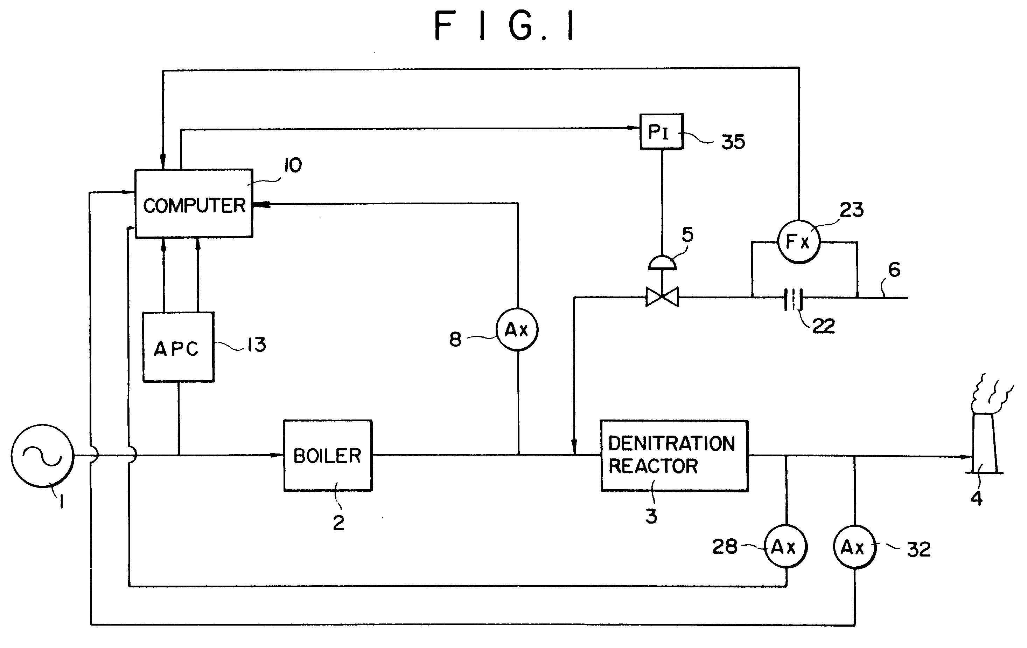

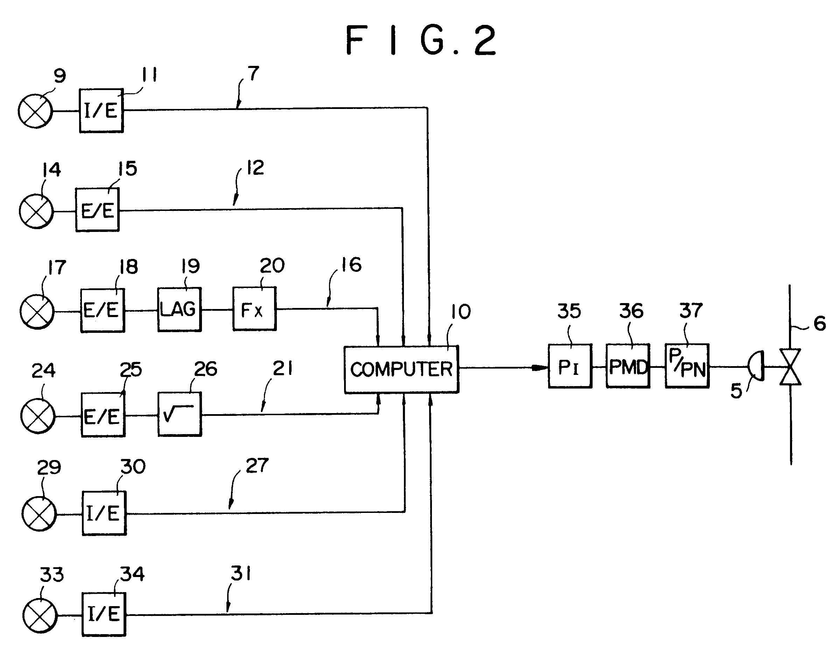

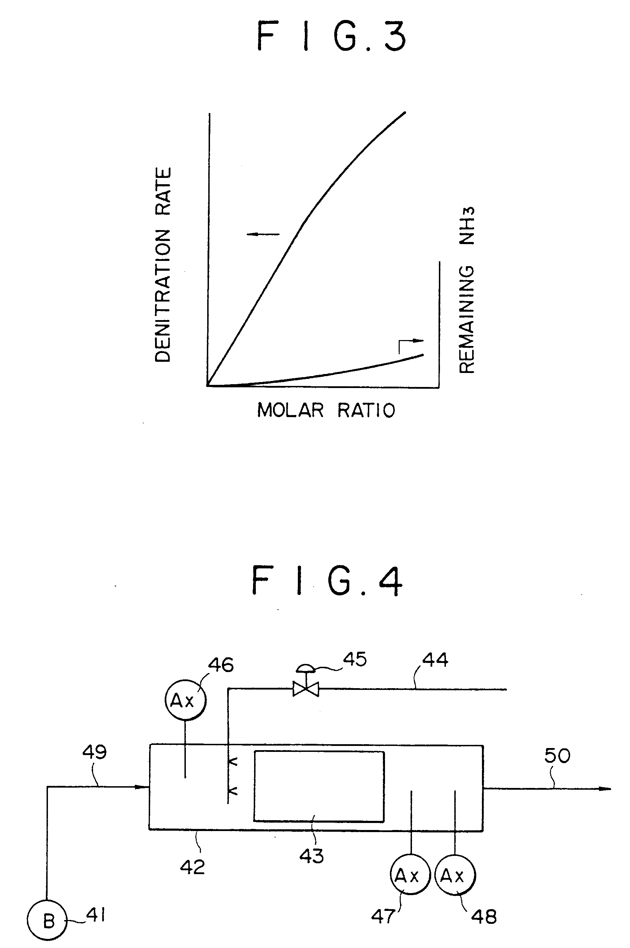

Fig. 1 is a system diagram of a denitrating apparatus incorporating an $NH_3$ injection controller according to an embodiment of the present invention; Fig. 2 is a control system diagram of Fig. 1; Fig. 3 is a graph showing an example of denitration performance; Fig. 4 is a system diagram of a simplified denitration test equipment; Fig. 5 is a system diagram of a denitrating apparatus incorporating a conventional $NH_3$ injection controller; and Fig. 6 is a conventional control system diagram.

BEST MODE FOR CARRYING OUT THE INVENTION

An embodiment of the present invention is described in detail with reference to Figs. 1 and 2. Fig. 1 is a system diagram of an exhaust gas denitrating apparatus incorporating an $NH_3$ injection controller according to the present invention, and Fig. 2 is a system diagram of the $NH_3$ injection controller. In the figure, a forced draft fan 1 is coupled with a boiler 2. The boiler 2 is coupled with a denitration reactor 3 through a pipe, and the reactor 3 is further coupled with a chimney 4 through a pipe. A pipe portion at an inlet of the reactor 3 is coupled with an $NH_3$ intake pipe 6 provided with a control valve 5 for a flow of $NH_3$.

On the other hand, the $NH_3$ injection controller includes a measuring system 7 which measures a concentration of NOx at the inlet of the reactor 3 as shown in Figs. 1 and 2. The measuring system 7 includes an analyzer 8 which measures the NOx concentration at the inlet of the reactor 3, an oscillator 9 which is coupled with the analyzer 8, and a current-to-voltage converter 11 which converts a signal from the oscillator 9 to supply the converted signal to a computer 10.

In the figures, reference numeral 12 denotes a load command system, which includes an oscillator 14 connected to an existing APC (Automatic Plant Controller) 13 and an isolated voltage converter 15 which converts a signal from the oscillator 14 to supply the converted signal to the computer 10.

Reference numeral 16 denotes a measuring system for combustion air and fuel consumption. The measuring system 16 includes an oscillator 17 connected to the APC 13 and a function generator 20 connected to the oscillator 17 through an isolated voltage converter 18 and a first-order lag element 19. A signal from the function generator 20 is supplied to the computer 10.

In the figures, reference numeral 21 denotes a measuring system for a flow of $NH_3$. The measuring system 21 includes a flow meter 23 which measures a flow before and after an orifice 22 provided in the $NH_3$ intake pipe 6, an oscillator 24 connected to the flow meter 23 and a function operation unit 26 connected to the oscillator 24 through an isolated voltage converter 25. A signal from the function operation unit 26 is supplied to the computer 10.

Reference numeral 27 denotes a measuring system which measures a concentration of NOx at an outlet of the reactor 3. The measuring system 27 includes an analyzer 28 which measures a concentration of NOx at the outlet of the reactor 3, an oscillator 29 connected to the analyzer 28 and a current-to-voltage converter 30 which converts a signal of the oscillator 29 to supply the converted signal to the computer 10.

In the figures, reference numeral 31 denotes a measuring system for $NH_3$ concentration. The measuring system 31 includes an analyzer 32 which measures the concentration of $NH_3$ at the outlet of the reactor 3, an oscillator 33 connected to the analyzer 32 and a current-to-voltage converter 34 which converts a signal of the oscillator 33 to supply the converted signal to the computer 10.

The computer 10 is connected to a proportional-plus-integral adjuster 35 and is further connected through a pulse motor driver 36 and a pulse-to-air converter 37 to the $NH_3$ gas flow control valve 5 provided in the $NH_3$ intake pipe 6.

Operation of the $NH_3$ injection controller described above is now described.

A quantity of $NH_3$ injected in the inlet of the reactor 3 is determined by a control program of the computer on the basis of the signals of the measuring system 7, the load command system 12 and the measuring systems 16, 21, 27 and 31 supplied to the computer 10. In the control program, the $NH_3$ injection quantity produced from the computer 10 is obtained by combination of $NH_3$ quantities determined by five control elements.
Namely, the total $NH_3$ quantity = $B_1$ + $B_2$ + $B_3$ + $B_4$ + $B_5$

(1) Quantity ($B_1$) determined by mass balance

The base quantity of $NH_3$ in accordance with the load (exhaust gas quantity to be treated) is determined as a function of the load.

(2) Rapidly increased load countermeasure ($B_2$)

Since the concentration of NOx at the inlet of the reactor 3 is rapidly increased upon increase of the load, $NH_3$ is injected in the pulse manner upon the increase of the load. An amplitude and a width of the output pulse can be changed depending on the load. When the load demand is decreased before the completion of the pulse output, the pulse output is stopped immediately.

(3) NOx countermeasure at the outlet of the reactor ($B_3$)

When a difference between the measured value and the set value of NOx at the outlet of the reactor 3 is large, $NH_3$ is increased in the pulse manner and when the difference is small, the pulse output is stopped.

(4) $NH_3$ countermeasure at the outlet of the reactor ($B_4$)

When a difference between the measured value and the set value of $NH_3$ at the outlet of the reactor 3 is large, $NH_3$ is decreased in the pulse manner and when the difference is small, the pulse output is stopped.

(5) Estimation control ($B_5$)

The concentration of $NH_3$ at the outlet of the reactor 3 is estimated by the denitration reaction estimation model equation to determine the increased and decreased $NH_3$ injection quantity.

The proportional plus integral adjuster 35 serves to adjust the difference between a final $NH_3$ amount calculated by the computer 10 and actual $NH_3$ amount to be poured so that a pulse signal is transmitted again by the pulse motor drive 36 and the amount of air for opening and closing the $NH_3$ flow control value 5 can be controlled from said pulse signal further by the pulse-to-air converter.

The $NH_3$ injection controller according to the present invention is not limited to the components illustrated in Figs. 1 and 2 and a controller having any components can control the $NH_3$ injection by inputting the output control signals such as the NOx concentration at the inlet of the reactor, the load command, the combustion air, the fuel consumption, the flow of $NH_3$, the NOx concentration at the outlet of the reactor, the $NH_3$ concentration at the outlet of the reactor and the like to the computer having the control program.

Description is now made of the denitration reaction estimation model equation.

The denitration performance can be obtained from the relation of the molar ratio and the denitration rate shown in Fig. 3. The relational expressions between the performance, the molar ratio and the denitration rate are obtained on the basis of the performance curves shown in Fig. 3. The NOx and $NH_3$ concentrations at the outlet of the denitration reactor can be estimated in accordance with the relational expressions from the NOx concentration at the inlet, the $NH_3$ injection quantity and the gas quantity as follows. Generally, the molar ratio and the denitration rate can be obtained by:

Denitration Rate (%) = (NOx Conc. at Inlet - NOx Conc. at Outlet) ÷ (NOx Conc. at Inlet) x 100          - (1-1)

Molar Ratio = Denitration rate/100 + Remaining Ammonia Conc./NOx Conc. at Inlet          (1-2)

Further,

Molar ratio = $NH_3$ Injection/(Gas Quant. x NOx Conc. at Inlet)          (1-3)

Remaining $NH_3$ = (Molar Ratio - Denitration Rate/100) x NOx Conc. at Inlet          (1-4)

(1) The molar ratio is obtained from the equation (1-3) on the basis of the $NH_3$ quantity at the inlet of the denitration reactor and the gas quantity.
(2) The denitration rate is obtained from the relational expressions obtained from Fig. 3 on the basis of the molar ratio obtained in (1).
(3) NOx at the outlet can be estimated from the equation (1-1) on the basis of the denitration rate obtained in (2) and the NOx concentration at the inlet of the denitration reactor.

(4) NH$_3$ at the outlet can be estimated from the equation (1-4) on the basis of the denitration rate, the molar ratio and the NOx concentration at the inlet of the reactor.

The relational expressions are different depending on a catalyst, properties of gas and the like and hence it is necessary to obtain the relation shown in Fig. 3 by experiment of an actual machine or a test equipment.

In the experiment of the actual machine, the NH$_3$ injection quantity (molar ratio) is changed during the base load operation (the NOx concentration at the inlet of the denitration reactor is made constant) and at this time the denitration rate is calculated on the basis of detection values of meters measuring the NOx concentrations at the inlet and the outlet. Thus, the relation of the molar ratio and the denitration rate can be obtained. At this time, the remaining NH$_3$ concentration can be confirmed by the meter measuring the NH$_3$ concentration at the outlet.

However, the actual machine which is in operation can not make such an experiment easily and accordingly the test equipment as shown in Fig. 4 can be used instead.

The test equipment is now described. The test equipment includes a simplified boiler 41 which can adjust the properties and the temperature of exhaust gas, a test cylinder 42, an NH$_3$ injection pipe 44, an NH$_3$ flow adjusting valve 45, a meter 46 for measuring the concentration of NOx at the inlet, a meter 47 for measuring the concentration of NOx at the outlet, a meter 48 for measuring the concentration of NH$_3$ at the outlet, an exhaust gas pipe 49 and a gas exhaust pipe 50. The test cylinder 42 is filled with a catalyst 43. The gas exhausted from the boiler 41 flows through the pipe 49 into the test cylinder 42. The concentration of NOx in the flowing gas is measured by the NOx concentration meter 46. Further, NH$_3$ is injected before the catalyst 43 in the test cylinder 42 from the NH$_3$ injection pipe 44 through the NH$_3$ flow adjusting valve 45.

The NH$_3$ and the exhaust gas injected before the catalyst 43 pass through the catalyst 43. At this time, the denitration reaction takes place and NOx in the exhaust gas is reduced. After the exhaust gas has passed through the catalyst 43, the NOx and NH$_3$ concentrations contained in the exhaust gas are measured by the NOx concentration meter 47 and the NH$_3$ concentration meter 48, respectively, which are disposed behind the catalyst 43, and then the exhaust gas flows through the exhaust pipe 50 to the outside. Thus, the denitration rate is obtained from the NOx concentrations at the inlet and the outlet, and the molar ratio is obtained from the gas quantity, the NH$_3$ injection quantity and the NOx concentration at the inlet (or is obtained from the denitration rate, the NOx concentration at the inlet and the NH$_3$ concentration behind the catalyst 43). The relation of the molar ratio and the denitration rate can be obtained by changing the NH$_3$ injection quantity.

Fig. 4 shows a configuration of a simplified test equipment, while data with accuracy can be obtained by causing such a test equipment to approach the actual state.

## Claims

1. An NH$_3$ injection controller which controls a quantity of NH$_3$ injected into a denitrating apparatus (3) for exhaust gas containing NOx, provided with

   - metering means (7) for measuring NOx concentration at the inlet of the denitrating apparatus (3) with a concentration detector (analyzer 8) followed by signal stages (9, 11)
   - metering means (27) for measuring NOx concentration at the outlet of the denitrating apparatus (3), with a concentration detector (analyzer 28), followed by signal stages (29,30)
   - metering means (31) for measuring NH$_3$ concentration at the outlet of the denitrating apparatus (3), with a concentration detector (analyzer 32) followed by signal stages (33, 34)
   - metering means (21) for measuring the flow-rate of NH$_3$ injected, with a flow-meter (23) followed by signal stages (24, 25, 26)
   - metering means (16) including a detector and signal stages (17 - 20) for measuring the flow-rate of exhaust gas introduced into the denitrating apparatus (3), and
   - control means (10) for combining the output signals of these signal stages to determine the pour-in amount of NH$_3$ and to produce corresponding output signals to the NH$_3$ injector (5),

   characterised in that

   - said control means (10) consist of a single computer stage (10), on whose inlet the output signal of the metering means (21) for measuring the flow-rate of injected NH$_3$ is also imposed,
   - the detector of said metering means (16) for measuring the flow-rate of exhaust gas is coupled with load-controller (13) of the exhaust gas generator, in connection with load variation detector means (12) with a detector and signal stages (14, 15) for detecting rapid variation in the setting of said load-controller,

- said control means (10) are provided with
  -- means for determining a base quantity ($B_1$) of $NH_3$ injected on the basis of a signal from said metering means (16) for measuring the flow-rate of exhaust gas, producing an output signal corresponding to the base quantity,
  -- means for determining pulsed amount ($B_2$) of $NH_3$ injected on the basis of a signal from the load variation detector means (12), producing a pulsed signal varying in amplitude and width of the pulses corresponding to a rapid increase of the load and therefore of the flow of exhaust gas and/or NOx concentration,
  -- means for determining pulsed amounts ($B_3$) of $NH_3$ injected on the basis of a pulse signal varying in amplitude and width of the pulses corresponding to a difference between the measured value of NOx at the outlet of the denitrating apparatus (3) and a set value of NOx, whereby the set value is an estimated value of NOx concentration at the outlet of the denitrating apparatus (3) on the basis of the measured NOx concentration at the inlet of the denitrating apparatus and the nitration rate in a model type nitration reaction;
  -- means for determining pulsed amounts ($B_4$/$B_5$) of $NH_3$ injected on the basis of a correcting pulse signal varying in amplitude and width of the pulses corresponding to a difference between the measured value of $NH_3$ at the outlet of the denitrating apparatus and a set value of $NH_3$, whereby the set value is an estimated value of $NH_3$ concentration at the outlet of the denitrating apparatus (3) on the basis of the flow-rate of the exhaust gas, the NOx concentration in the exhaust gas, the denitration rate in the model type denitration reaction and the base quantity ($B_1$) of the injected $NH_3$,
- there are means (35, 36, 37) for controlling a quantity of $NH_3$ injected into the denitrating apparatus in accordance with the base quantity signal ($B_1$) of the injected $NH_3$ and the pulse signals ($B_2$; $B_3$; $B_4$) of $NH_3$.

**Patentansprüche**

1. Ein $NH_3$ - Einspritzregler, welcher die Menge an in eine Denitrierungsvorrichtung (3) für $NO_x$ enthaltendes Abgas eingespritztem $NH_3$ reguliert, mit

- Meßmitteln (7) zur Messung der $NO_x$ - Konzentration am Einlaß der Denitrierungsvorrichtung (3) mit einem Anzeigegerät für die Konzentration (Analysator 8) gefolgt von Signalstufen (9, 11,)
- Meßmitteln (27) zur Messung der $NO_x$-Konzentration am Auslaß der Denitrierungsvorrichtung (3) mit einer Anzeigevorrichtung für die Konzentration (Analysator 28), gefolgt von Signalstufen (29, 30)
- Meßmitteln (31) zur Messung der $NH_3$-Konzentration am Auslaß der Denitrierungsvorrichtung (3), mit einer Anzeigevorrichtung für die Konzentration (Analysator 32) gefolgt von Signalstufen (33, 34),
- Meßmitteln (21) zur Messung des Durchsatzes von eingespritztem $NH_3$, mit einem Durchflußmesser (23) gefolgt von Signalstufen (24, 25, 26),
- Meßmitteln (16) einschließlich einer Anneigevorrichtung und Signalstufen (17-20) zur Messung des Durchsatzes von in die Denitrierungsvorrichtung (3) eingeleitetem Abgas, und
- einer Steuereinrichtung (10) zur Vereinigung der Output-Signale dieser Signalstufen, um die Einströmrate des $NH_3$ zu bestimmen und entsprechende Output-Signale an die $NH_3$- Einspritzvorrichtung (5) zu erzeugen,

dadurch gekennzeichnet, daß

- die Steuerungseinrichtung (10) aus einer einzelnen Computer- Stufe (10) besteht, an deren Eingang auch das Output- Signal der Meßmittel (21) zur Messung des Duchsatzes des eingespitzten $NH_3$ angelegt ist,
- die Anzeigevorrichtung dieser Meßmittel (16) zur Messung des Abgasdurchsatzes an die Ladekontrolleinrichtung (13) des Abgasgenerators gekoppelt ist, zusammen mit den Anzeigemitteln für eine Ladungsänderung (12) mit einem Anzeigegerät und Signalstufen (14, 15) zum Nachweis einer schnellen Änderung in der Einstellung der Ladekontrolleinrichtung,
- wobei die Steuerungseinrichtung (10) versehen ist mit
  -- Mitteln zur Bestimmung der Hauptmenge ($B_1$) an eingespritztem $NH_3$ auf Grundlage eines von den Meßmitteln (16) zur Messung des Abgasdurchsatzes stammenden Signals, wobei ein der Hauptmenge entsprechendes Output- Signal erzeugt wird,

-- Mitteln zur Bestimmung der stoßweisen Menge ($B_2$) an $NH_3$, welches auf Grundlage eines von den Mitteln für die Anzeige einer Ladungsänderung (12) stammenden Signals eingespritzt wird, wobei ein Impulssignal erzeugt wird, welches in Amplitude und Breite der Pulse variiert, entsprechend einer schnellen Zunahme der Beschickung und daher auch des Abgasdurchflusses und/ oder der $NO_x$- Konzentration,

-- Mitteln zur Bestimmung stoßartiger Mengen ($B_3$) an $NH_3$, die auf Grundlage eines Impulssignals eingespritzt werden, welches in Amplitude und Breite der Pulse variiert, entsprechend einer Differenz zwischen dem gemessenen $NO_x$- Wert am Ausgang der Denitrierungsvorrichtung (3) und einem $NO_x$- Sollwert, wobei der Sollwert ein aus der gemessenen $NO_x$- Konzentration am Eingang der Denitrierungsvorrichtung und der Nitrierungsrate in einer modellartigen Nitrierungsreaktion berechneter Wert für die $NO_x$- Konzentration am Ausgang der Denitrierungsvorrichtung (3) ist, und

-- Mitteln zur Bestimmung stoßartiger Mengen ($B_4/B_5$) an $NH_3$, die auf Grundlage eines Korrekturimpulssignals eingespritzt werden, welches in Amplitude und der Breit der Pulse variiert, entsprechend einer Differenz zwischen dem gemessenen $NH_3$- Wert am Ausgang der Denitrierungsvorrichtung und einem Sollwert für $NH_3$, wobei der Sollwert ein aus dem Durchsatz des Abgases, der $NO_x$- Konzentration im Abgas, der Denitrierungsrate in der modellartigen Denitrierungsreaktion und der Hauptmenge ($B_1$) an eingespritztem $NH_3$ berechneter Wert für die $NH_3$- Konzentration am Ausgang der Denitrierungsvorrichtung (3) ist,

- und, daß Mittel (35, 36, 37) vorliegen zum Steuern einer gemäß dem Signal ($B_1$) für die Hauptmenge des eingespritzten $NH_3$ und der Impulssignale ($B_2$; $B_3$; $B_4$) für $NH_3$ in die Denitrierungsvorrichtung eingespritzten $NH_3$- Menge.

## Revendications

1. Régulateur d'injection de $NH_3$ qui règle une quantité de $NH_3$ injectée dans un appareil de dénitration (3) d'un gaz d'échappement contenant $NO_x$, comportant

- des moyens de mesure (7) pour mesurer la concentration de $NO_x$ à l'entrée de l'appareil de dénitration (3), comportant un détecteur de concentration (analyseur 8) suivi par des étages de traitement du signal (9, 11)

- des moyens de mesure (27) pour mesurer la concentration de $NO_x$ à la sortie de l'appareil de dénitration (3), comportant un détecteur de concentration (analyseur 28) suivi par des étages de traitement du signal (29, 30)

- des moyens de mesure (31) pour mesurer la concentration de $NH_3$ à la sortie de l'appareil de dénitration (3), comportant un détecteur de concentration (analyseur 32) suivi par des étages de traitement du signal (33, 34)

- des moyens de mesure (21) pour mesurer le débit de $NH_3$ injecté, comportant un débitmètre (23) suivi d'étages de traitement du signal (24, 25, 26)

- des moyens de mesure (16) comprenant un détecteur et des étages de traitement du signal (17 - 20) pour mesurer le débit de gaz d'échappement introduit dans l'appareil de dénitration (3), et

- des moyens de commande (10) pour combiner les signaux de sortie de ces étages de traitement de signaux afin de déterminer la quantité à introduire de $NH_3$ et de délivrer des signaux de sortie correspondants à l'injecteur de $NH_3$ (5),

caractérisé en ce que

- lesdits moyens de commande (10) consistent en un seul étage d'ordinateur (10) à l'entrée duquel est également appliqué le signal de sortie des moyens de mesure (21) pour mesurer le débit de $NH_3$ injecté,

- le détecteur desdits moyens de mesure (16) pour mesurer le débit du gaz d'échappement est couplé à un régulateur de charge (13) du générateur de gaz d'échappement, en liaison avec des moyens détecteurs de variation de charge (12) comportant un détecteur et des étages de traitement du signal (14, 15) pour détecter une variation rapide du réglage dudit régulateur de charge,

- lesdits moyens de commande (10) sont munis de

-- moyens pour déterminer une quantité de base ($B_1$) de $NH_3$ injecté d'après un signal provenant desdits moyens de mesure (16) pour mesurer le débit de gaz d'échappement, produisant un signal de sortie correspondant à la quantité de base,

-- moyens pour déterminer une quantité pulsée ($B_2$) de $NH_3$ injecté d'après un signal provenant des moyens détecteurs de variation de charge (12), produisant un signal impulsionnel variant en amplitude et largeur des impulsions correspondant à une augmentation rapide de la charge et par conséquent du débit de gaz d'échappement et/ou de la concentration de $NO_x$,

-- moyens pour déterminer des quantités pulsées ($B_3$) de $NH_3$ injecté d'après un signal impulsionnel variant en amplitude et largeur des impulsions correspondant à une différence entre la valeur mesurée de $NO_x$ à la sortie de l'appareil de dénitration (3) et une valeur fixée de $NO_x$, la valeur fixée étant une valeur estimée de concentration de $NO_x$ à la sortie de l'appareil de dénitration (3) d'après la concentration de $NO_x$ mesurée à l'entrée de l'appareil de dénitration et le taux de nitration dans une réaction de nitration type servant de modèle ;

-- moyens pour déterminer des quantités pulsées ($B_4/B_5$) de $NH_3$ injecté d'après un signal impulsionnel de correction variant en amplitude et largeur des impulsions correspondant à une différence entre la valeur mesurée de $NH_3$ à la sortie de l'appareil de dénitration et une valeur fixée de $NH_3$, valeur fixée étant une valeur estimée de concentration de $NH_3$ à la sortie de l'appareil de dénitration (3) d'après le débit du gaz d'échappement, la concentration de $NO_x$ dans le gaz d'échappement, le taux de dénitration dans la réaction de dénitration type servant de modèle et la quantité de base ($B_1$) du $NH_3$ injecté,

- des moyens (35, 36, 37) étant prévus pour régler une quantité de $NH_3$ injectée dans l'appareil de dénitration en fonction du signal do quantité de base ($B_1$) du $NH_3$ injecté et des signaux impulsionnels ($B_2$, $B_3$, $B_4$) de $NH_3$.

# F I G. I

EP 0 263 183 B1

F I G. 2

# F I G . 3

DENITRATION RATE

REMAINING NH3

MOLAR RATIO

# F I G . 4

46

45

44

Ax

49

Ax    Ax

50

42    43

47    48

B    41

# F I G . 5

EP 0 263 183 B1

# F I G. 6

EP 0 263 183 B1